**Europäisches Patentamt**

**European Patent Office**

**Office européen des brevets**

(19)

(11) Veröffentlichungsnummer : **0 037 878 B2**

(12) # NEUE EUROPÄISCHE PATENTSCHRIFT

(45) Veröffentlichungstag der neuen Patentschrift : **22.01.92 Patentblatt 92/04**

(51) Int. Cl.$^5$ : **C08L 97/02, B27N 1/00, // (C08L97/02, 61:00)**

(21) Anmeldenummer : **81100887.9**

(22) Anmeldetag : **09.02.81**

(54) Herstellung von Holzwerkstoffen mit sehr geringer Formaldehydabgabe.

Die Akte enthält technische Angaben, die nach dem Eingang der Anmeldung eingereicht wurden und die nicht in dieser Patentschrift enthalten sind.

(30) Priorität : **19.02.80 DD 219127**

(43) Veröffentlichungstag der Anmeldung : **21.10.81 Patentblatt 81/42**

(45) Bekanntmachung des Hinweises auf die Patenterteilung : **12.06.85 Patentblatt 85/24**

(45) Bekanntmachung des Hinweises auf die Entscheidung über den Einspruch : **22.01.92 Patentblatt 92/04**

(84) Benannte Vertragsstaaten : **BE DE FR IT SE**

(56) Entgegenhaltungen :
**EP-A- 0 006 486**
**EP-A- 0 013 447**
**EP-A- 0 025 245**
**CH-A- 370 241**
**DD-A- 209 710**
**DE-A- 2 745 951**
**DE-B- 1 165 248**
**DE-B- 2 832 509**
**GB-A- 1 480 787**
**SU-A- 496 291**
**US-A- 3 649 397**
**HOLZ ALS ROH- UND WERKSTOFF, E.Roffael, Bd.34 (1976), Seiten 385-390**

(56) Entgegenhaltungen :
**CHEMICAL ABSTRACTS, Vol. 90, no. 39809d (1979)**
**ENCYLOPEDIA OF POLYMER SCIENCE AND TECHNOLOGY, vol. 2 (1965), Seite 12-17**
**ULLMANN'S Enzyklopädie der Techn. Chemie, 4. Auflage, Band 7, Seite 421**
**RECUEIL des Travaux Chimiques des Pays-Bas, Band 72 (1953), Seiten 1027-1034**

(73) Patentinhaber : **LEUNA-WERKE AG O-4220 Leuna 3 (DE)**

(72) Erfinder : **Barse, Joachim 467/3 O-4090 Halle-Neustadt (DE)**
Erfinder : **Esser, Gerhard, Dr. Lilienweg 2 O-4220 Leuna (DE)**
Erfinder : **Kiessling, Wolf, Dr. Otto-Adam-Strasse 11 O-7022 Leipzig (DE)**
Erfinder : **Lippert, Bernd, Dipl.-Chem. 233/8 O-4090 Halle-Neustadt (DE)**
Erfinder : **Papstein, Hagen, Dr. 653/9 O-4090 Halle-Neustadt (DE)**
Erfinder : **Rössing, Peter Feldstrasse 5 O-3101 Hohendodeleben (DE)**
Erfinder : **Steinke, Ulrich, Dr. Karl-Schurz-Strasse 2 O-4020 Halle (DE)**
Erfinder : **Winter, Harald, Dr. Windmühlenstrasse 10 O-4220 Leuna (DE)**

EP 0 037 878 B2

## Beschreibung

Die Erfindung betrifft die Herstellung von Holzwerkstoffen mit sehr geringer Formaldehydabgabe, die durch Verleimung entsprechender Rohstoffe mit Kondensationsprodukten aus Harnstoff und Formaldehyd, ggf. im Gemisch mit einem anderen Aldehyd, hergestellt werden.

Charakteristik der bekannten technischen Lösungen

Es ist bekannt, dass Kondensationsprodukte des Formaldehyds mit Harnstoff bzw. Melamin sowohl während des Aushärtungsvorganges als auch nach dessen Beendigung Formaldehyd abgeben. Besonders die Formaldehydabgabe aus dem verleimten Werkstoff, die durch restlichen freien oder hydrolytisch gebildeten Formaldehyd verursacht werden kann, ist für die Verarbeiter und Verbraucher derartiger Werkstoffe von ausserordentlicher Bedeutung, da sie zu gesundheitlichen Schäden führen kann.

Es ist weiterhin bekannt, dass die nachträgliche Abspaltung von Formaldehyd aus Holzwerkstoffen durch Verringerung des im Harnstoff-Formaldehyd-Harz gebundenen Formaldehyds oder durch Beimengung von Harnstoff zum Leim gesenkt werden kann. In beiden Fällen muss mit negativen Auswirkungen auf die physikalischtechnologischen Eigenschaften der Holzwerkstoffe gerechnet werden (Roffael, Holz als Rohund Werkstoff 34 [1976] 385-390, EP-A 6 486).

Es ist weiterhin bekannt, dass die nachträgliche Formaldehydabgabe aus Holzwerkstoffen durch die Vorbehandlung der zu verleimenden Holzrohstoffe mit einer wässrigen Dispersion eines in Wasser dispergierbaren Polymerisates oder Wachses und eines wasserverträglichen Mittels zur Bindung von Formaldehyd um 50-75% gesenkt werden kann. Trotz der erheblichen Vorzüge dieser Verfahrensweise gegenüber früheren Versuchen zur Verringerung der nachträglichen Formaldehydabgabe aus Holzwerkstoffen stellte sich als nachteilig heraus, dass z.B. bei der Spanplattenherstellung, bedingt durch die Zusammensetzung und Menge der Zusatzprodukte, ein erheblicher Kostenanstieg eintritt. Ein weiterer Nachteil besteht darin, dass die Wirkung des Zusatzproduktes an dessen Versprühung auf den Holzrohstoff gebunden ist und das Verfahren damit nur für einen Teil der zur Herstellung von Spanplatten überlicherweise verwendeten Anlagen ohne deren Veränderung anwendbar ist (DE-A 2 740 207).

Es bestand die Aufgabe, ein Verfahren zur Herstellung von Holzwerkstoffen mit sehr geringer Formaldehydabgabe zu entwickeln, das die Kosten der Werkstoffherstellung nicht entscheidend erhöht und allseitig anwendbar ist.

Diese Aufgabe wird durch ein Verfahren zur Herstellung von Holzwerkstoffen, vorzugsweise Holzspannplatten, die durch Verleimung entsprechender Rohstoffe, vorzugsweise von Holzspänen, mit Kondensationsprodukten aus Harnstoff und Formaldehyd als Binde mittel, gegebenenfalls im Gemisch mit einem anderen Aldehyd ohne Zusatz von Alkalimetallhalsgenüden, hergestellt werden, erfindungsgemäss dadurch gelöst, dass dem zu verleimenden Holzrohstoff oder dem Bindemittel zur Formaldehydaufnahme geeignete Kondensationsprodukte aus formaldehydbindenden Monomeren, vorzugsweise Harnstoff und Aldehyden, vorzugsweise Formaldehyd, gegebenenfalls in Verbindung mit einem formaldehydbindenden Monomeren, zugefügt werden.

Die im Sinne der Erfindung zur Verleimung eingesetzten Kondensationsprodukte aus Harnstoff sind die üblichen, als Bindemittel insbesondere für die Herstellung von Holzwerkstoffen verwendeten Produkte, die sowohl als wässrige Lösungen als auch als Pulver im Handel sind. Bei Kondensaten aus Formaldehyd und Harnstoff liegt das Molverhältnis dieser Verbindungen gewöhnlich zwischen 1,2 und 1,7. Auch wenn das Kondensat weitere Bestandteile, wie z.B. Melamin, Phenol oder Melamin und Phenol bzw. andere Aldehyde als Formaldehyd enthält, bleibt das Verhältnis zwischen der Carbonylgruppe und der mit dieser zur Reaktion befähigten Gruppierung meist in dem Bereich, der dem genannten Molverhältnis Formaldehyd/Harnstoff zugrunde liegt.

Die erfindungsgemäss zur Herstellung von Holzwerkstoffen mit sehr geringer Formaldehydabgabe eingesetzten Kondensationsprodukte aus formaldehydbindenden Monomeren, wie Harnstoff und Formaldehyd oder anderen Aldehyden haben ein im Vergleich zu den Üblichen Leimen verringertes Verhältnis zwischen der Carbonylgruppe und der mit dieser zur Reaktion befähigten Gruppierung. Z.B. liegt das Molverhältnis von Harnstoff/Formaldehyd-Kondensaten, die zur Herstellung von Holzspanplatten mit sehr geringer Formaldehydabgabe Verwendung finden, zweckmässigerweise zwischen 1:0,3 und 1:1,0. Wird die Formaldehydmenge darüber hinaus verringert, sind Festigkeitsverluste der Spanplatte bei sonst gleichen Verleimungsbedingungen nicht auszuschliessen. Bei Erhöhung des Formaldehydanteils Über den genannten Wert wären zur Erreichung vergleichbarer Effekte grössere Mengen des Kondensationsproduktes erforderlich, die jedoch durch gleichzeitige Zugabe eines formaldehydbindenden Monomeren verringert werden können.

Wesentliche Voraussetzung für die Verwendbarkeit der Kondensationsprodukte ist neben der Formaldehydbindung deren Lagerstabilität. Die in den Anwendungsbeispielen beschriebenen Versuche wurden mit Produkten durchgeführt, die nicht handelsüblich sind. Die formaldehydbindenden Kondensationsprodukte können sowohl dem Bindemittel als auch dem zu verleimenden Rohstoff zugefügt werden. Bezogen auf die Herstellung von Spanplatten ergeben sich daraus die Möglichkeiten, das Kondensat entweder dem zur Verleimung vorgesehenen Bindemittel bzw. der Leimflotte zuzusetzen oder die unbeleimten Späne einzusprühen. Die Menge des Zusatzes ist von der Formaldehydabgabe des verwendeten Bindemittels und der Grösse des gewünschten Effektes abhängig. Werden z.B. Spanplattenleime mit FESYP-Formaldehyd-Werten von 0,06 und 0,03% als Bindemittel eingesetzt, so ist zur Erreichung des gleichen Endwertes der Formaldehydabgabe für den erstgenannten Leim die grössere Menge des erfindungsgemässen Zusatzproduktes erforderlich.

Beispiel 1 (Vergleichsbeispiel)

Aus einem handelsüblichen Harnstoff/Formaldehyd-Bindemittel wird eine Leimflotte der Zusammensetzung

| | |
|---|---|
| Leim | 100 kg |
| Wasser | 25 kg |
| Paraffinemulsion (40%ig) | 6 kg |
| 15%ige $NH_4Cl$-Lösung | 4 kg |

bereitet und in einer Menge von 8% Harz, bezogen auf atro Holz, auf Kiefer-Schneidspäne (Länge: 15-20 mm, Breite: 3-5 mm Dicke: 0,2-0,4 mm) aufgebracht. Die beleimten Späne werden unter den Bedingungen

| | |
|---|---|
| Presstemperatur | 160-165°C |
| Pressdruck | 1,5 N/mm$^2$ |
| Presszeit | 7 min. |

zu Spanplatten von 20 mm Stärke verarbeitet, die die folgenden, nach üblichen Methoden bestimmten Eigenschaften aufweisen:

| | |
|---|---|
| Dichte g/cm$^3$ | 0,610 |
| Biegefestigkeit N/mm$^2$ | 25,1 |
| Querzugsfestigkeit V 20 N/mm$^2$ | 0,63 |
| Quellung nach 2 h % | 3,3 |
| Formaldehydabgabe FESYP % | 0,035 |

Beispiel 2

Ein Harnstoff/Formaldehyd-Kondensat des Molverhältnisses 1:0,5 wird bei der Herstellung von Spanplatten gemäss Beispiel 1 eingesetzt. Vom Beispiel 1 abweichende Bedingungen sowie die Ergebnisse der Ausprüfung enthält Tab. 1.

Tabelle 1

| Zugabe des Zusatz | % pro atro Holz | | Dichte g/cm$^3$ | Charakteristik der Spanplatten | | | |
|---|---|---|---|---|---|---|---|
| | Leim (Harz) | Zusatz | | Biege- festigkeit N/mm$^2$ | Querzug- festigkeit N/mm$^2$ | Quellung nach 2 h | FESYP- Formaldehyd % |
| Vorsprühen | 8 | 2,3 | 0,611 | 25,5 | 0,65 | 3,4 | <0,01 |
| Flotte | 8 | 2,3 | 0,612 | 25,9 | 0,64 | 3,5 | <0,01 |
| Flotte | 6,6 | 2,3 | 0,614 | 24,5 | 0,60 | 3,6 | <0,01 |

Beispiel 3

Ein Gemisch aus 40% Leim gemäss Beispiel 1, 40% Harnstoff und 20% Wasser wird bei der Spanplattenherstellung gemäss Beispiel 1 als Zusatzprodukt verwendet. Vom Beispiel 1 abweichende Bedingungen sowie die Ergebnisse der Ausprüfung enthält Tab. 2.

Tabelle 2

| Zugabe des Zusatz | % pro atro Holz | | Dichte g/cm³ | Charakteristik der Spanplatten | | | |
|---|---|---|---|---|---|---|---|
| | Leim (Harz) | Zusatz | | Biegefestigkeit N/mm² | Querzugfestigkeit N/mm² | Quellung nach 2 h | FESYPFormaldehyd % |
| Vorsprühen | 8 | 2,4 | 0,607 | 26,2 | 0,67 | 3,1 | 0,01 |
| Vorsprühen | 7,4 | 2,4 | 0,607 | 24,9 | 0,61 | 3,3 | 0,01 |

**Patentansprüche**

1. Herstellung von Holzwerkstoffen mit sehr geringer Formaldehydabgabe, vorzugsweise von Holzspanplatten, die durch Verleimung entsprechender Rohstoffe, vorzugsweise von Holzspänen, mit an sich bekannten Kondensationsprodukten aus Harnstoff und Formaldehyd als Bindemittel, gegebenenfalls im Gemisch mit anderen Aldehyden, ohne Zusatz von Alkalimetallhalogeniden, hergestellt werden, dadurch gekennzeichnet, daß dem zu verleimenden Holzrohstoff oder dem Bindemittel Kondensationsprodukte aus Harnstoff und Formaldehyd im Molverhältnis 1,0:0,3 bis 1,0:1,0, gegebenenfalls in Verbindung mit einem formaldehydbindenden Monomeren, zugefügt werden.

**Claims**

1. Manufacture of wood material having a very low emission of formaldehyd, preferably of wood chip board having been manufactured by glueing respective raw materials, preferably wood chips, together with known condensation products from urea and formaldehyde as a binder, if desired admixed with other aldehydes, without any addition of alkali metal halogenides, characterized in that condensation products from urea and formaldehyde in a molar ratio 1,0 : 0,3 to 1,0 : 1,0, perhaps in addition with a formaldehyde binding monomer are added to the wood raw material to be glued or to the binder.

**Revendications**

1. Procédé de production de matériaux dérivés du bois avec un trés faible dégagement de formaldéhyde, avantaguesement de panneaux de particules, qui sont produits par collage de matiéres premiéres correspondantes, avantageusement de copeaux de bois, au moyen de produits connus de condensation d'urée et de formaldéhyde comme liant, le cas échéant en mélange avec d'autres aldéhydes, sans addition des halogénures alcalins caractérisé en ce que l'on ajoute, à la matiére première de bois à coller, ou au liant, des produits de condensation d'uree et de formaldéhyde à un rapport molaire de 1,0 : 0,3 à 1,0 : 1,0, le cas échéant en combinaison avec un monomére liant le formaldéhyde.

4